# EUROPEAN PATENT APPLICATION

(11) **EP 1 085 728 A2**
(43) Date of publication of application: **21.03.2001**
(21) Application number: 00119790.4
(22) Date of filing: 11.09.2000
(51) Int. Cl.: H04L 29/12, H04L 29/06

(54) **Communication terminal apparatus for data communication between network and computers and data communication method using it**

(30) Priority: 14.09.1999 JP 26104699
(71) Applicant: AIWA CO., LTD., Taito-ku, Tokyo (JP)
(72) Inventor: Tanaka, Taichi, Urawa-shi (JP); Osada, Hiroshi, Yoshikawa-shi (JP)
(74) Representative: Patentanwälte Leinweber & Zimmermann

(57) **Abstract**

A computer (10) operates to supply a command to a communication termination apparatus (20) so that the communication termination apparatus (20) may be connected with a provider for allocating a global address to the communication termination apparatus (20). Then, the authenticating process is executed between the computer (10) and the communication termination apparatus (20) and a private address is allocated to the computer (10). When the sending data with the private address is supplied from the computer (10), the communication termination apparatus (20) operates to convert the sending source private address into the global address and then add to the sending data the ID information for determining which of computers has sent the data. When the responding data is supplied from the network to the communication termination apparatus (20), a destination address of the responding data is converted from the global address of the communication termination apparatus (20) into the private address based on the ID information added to the responding data.

## Description

### BACKGROUND OF THE INVENTION

The present invention relates to a data communication method and a communication terminal apparatus, and more particularly to the communication terminal apparatus for data communication which is arranged to connect a network with computers therethrough and the data communication method using it.

There has been conventionally provided the following data communication system. That is, a plurality of servers are connected through a network so that various kinds of information stored in those servers may be transmitted among them. Concretely, on the internet, a plurality of servers such as a WWW (World Wide Web) server and a mail server are connected to the network so that various kinds of data including text data, pictures, voices and moving images may be transmitted through the network. In addition, the communication through an electronic mail may be executed as well.

As a method of connecting to the internet, there has been proposed one method of dialing up an access number on a public line of an internet service provider if necessary or another method of keeping the state of connecting with the internet through a leased communication line.

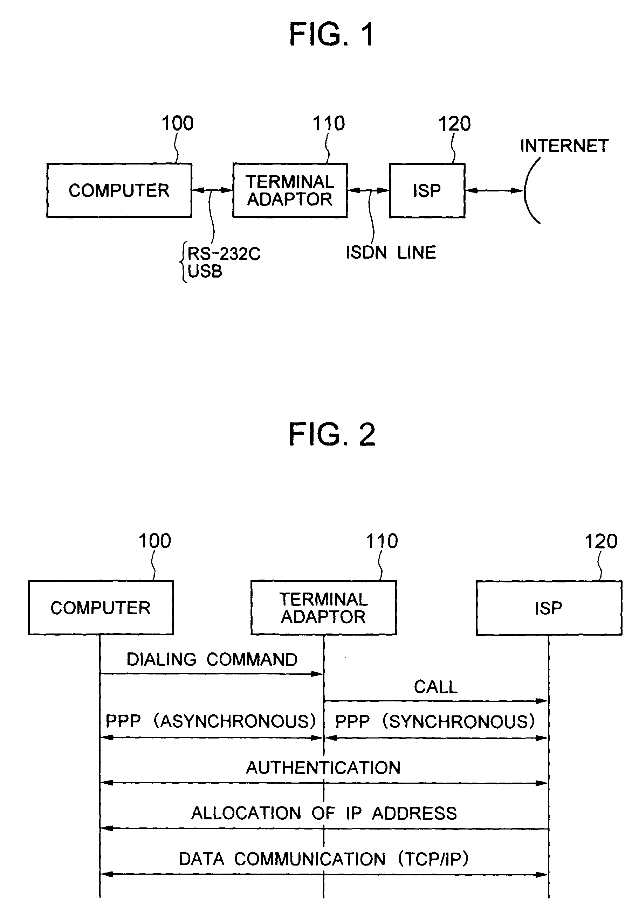

Fig. 1 illustrates a connecting arrangement of a computer to the internet through a terminal adaptor. The computer 100 is connected with a terminal adaptor 110 through a commonly available interface such as RS-232C or USB. The terminal adaptor 110 is connected with an internet service provider (ISP) 120 through the ISDN (Integrated Service Digital Network) so that the data may be communicated with the internet through this internet service provider 120.

Fig. 2 illustrates a connecting sequence with the internet service provider. When the computer 100 supplies a dialing command to the terminal adaptor 110, the terminal adaptor 110 operates to call the corresponding phone number to the internet service provider indicated by the dialing command.

The terminal adaptor 110 and the internet service provider 120 are synchronously connected with each other in the PPP (Point to Point Protocol) manner or the PPP multi-link manner and the computer 100 and the terminal adaptor 110 are asynchronously connected with each other. The authentication is executed between the computer 100 and the internet service provider 120. This authentication is executed for determining if the information supplied from the computer 100 such as a user ID or a password is correct, for determining acceptance or refusal of connecting with the internet. This is done by the internet service provider 120 with a PAP (Password Authentication Protocol). Further, through the use of the CHAP (Challenge Handshake Authentication Protocol), the internet service provider 120 operates to supply a challenge value to the computer 100. Then, the computer 100 performs an operation with the supplied challenge value. The resulting operational value is determined by the internet service provider 120. On the basis of the determined result, the internet service provider 120 operates to accept or refuse the connection with the internet.

Upon completion of the authentication, if the acceptance of connecting with the internet is determined, an IP address is allocated to the computer 100. Then, through the use of this IP address, the data is communicated with the WWW server or the like in the TCP/IP protocol.

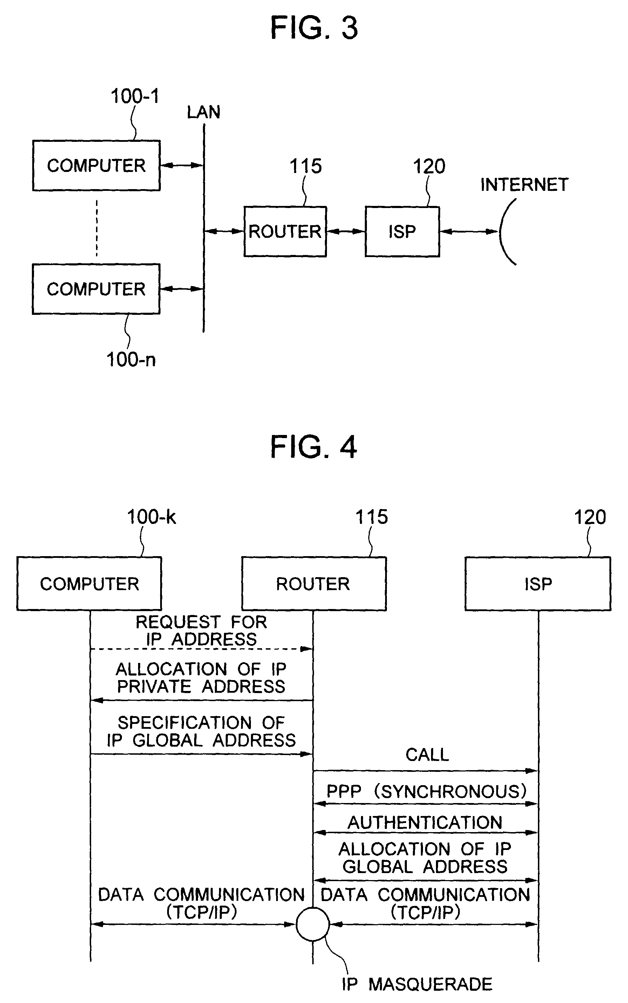

Fig. 3 illustrates the arrangement of the LAN (Local Area Network) using computers 100-1 to 100-n, in which one computer connected in this LAN is connected with the outside network that is the internet through a router 115. The computers 100-1 to 100-n are connected with the router 115 through a transmission cable such as 10BASE or 100BASE indicated in the Ethernet standards (IEEE802.3).

Fig. 4 illustrates the connecting sequence from the computers 100-1 to 100-n to the internet service provider. When the computer 100-k is started, the IP address is started to be requested. When the router 115 detects the request of this IP address, the IP address (referred to as "IP private address") in the LAN is allocated to each of the router 115 to the computer 100-k. The computer 100-k performs the data communication with this allocated IP private address in the TCP/IP address.

Herein, when the specified IP address is located outside of the LAN such as from the computer 100-k to the Internet (referred to as "IP global address"), a call from the router 115 to the internet service provider 120 is given. This router 115 stores the access phone number of the internet service provider 120 and the information required for the authentication such as a user ID and a password. Hence, the router 115 operates to call the stored phone number for accessing the internet service provider.

When the router 115 is connected with the internet service provider 120 in the PPP (Point to Point Protocol) or the PPP multi-link manner, the authentication with the internet service provider 120 is performed by using the user ID and the password stored in the router 115.

Upon completion of the authentication, when the acceptance of connecting with the internet is determined, the IP global address is allocated to the router 115. The data communication is executed by using this allocated IP global address and an IP header for indicating the IP global address of the destination specified by the computer 100-k. Further, the destination side performs the data communication with the responding destination of the IP global address allocated to the router 115. Herein, the router 115 performs some processes (such as the NAT (Network Address Translator) or the IP masquerade) of corresponding one IP private address with one IP global address or a plurality of IP private addresses with one IP global address so that the communication is executed between the WWW server and the computer 100-k in the TCP/IP protocol.

### SUMMARY OF THE INVENTION

If the terminal adaptor is used, the computer may easily access to the internet through the internet service provider merely by supplying the dialing command or the information required for the authentication. However, if a plurality of computers are connected with the terminal adaptor so that each computer may access to the internet through the internet service provider, since one IP global address is allocated to the terminal adaptor, the connection of plural computers to the internet is not so easy.

If the router is used, a plurality of computers may connect to the internet through the internet service provider. However, those computers are required to connect to the LAN without having to use the internet, so that each computer is burdened with load and has to execute the complicated process. Further, each computer needs the network device for composing the LAN and each network device needs the setup operation. It means that the connection of plural computers with the internet through the internet provider is not so cheap and simple.

It is an object of the present invention to provide an inexpensive and easy data communication method and communication terminal apparatus which are arranged to connect a plurality of computers to a network if necessary for doing data communication without using a network device or the like.

According to an aspect of the invention, the data communication method is arranged to connect the network with plural computers through the computer terminal apparatus for doing data communication, the computer terminal apparatus serving to allocate the corresponding private addresses to the computers having requested the connection with the network.

According to another aspect of the invention, the communication terminal apparatus is arranged to connect a network with plural computers for doing data communication and includes an address allocating unit for allocating the corresponding private addresses to the computers having requested the connection with the network. Further, the communication terminal apparatus also includes an address converting unit for, when the sending data that corresponds the private address allocated by the computer to the sending source private address is supplied, converting the sending source private address into a global address and adding to the sending data the ID information for determining which of the computers has sent the data, when the responding data for the sending data is supplied from the network side, converting a destination address of the responding data into the private address allocated to the computer determined on the ID information added to the responding data. Moreover, the communication terminal apparatus includes a storage unit for storing information and a control unit for controlling connection between the network and plural computers through a communication device for relaying connection with the network. The storage unit stores the information for connecting with the communication device. The control unit operates to perform the connecting process through the use of the communication device with the connecting information stored in the storage unit when the computer issues a request for connecting the communication device.

That is, when the plural computers are connected with the network through the communication terminal apparatus, the address allocated to the communication terminal apparatus is shared and the respective private addresses are allocated to the computers connected to the communication terminal apparatus. In doing data communication between the computer and the network, by performing an address converting process of converting the global address into the private address or the private address into the global address through the communication terminal apparatus, a plurality of computers may be connected to the network without having to use the network device in an inexpensive and simple manner.

According to another aspect of the invention, when doing data communication in connecting the network such as the internet with plural computers, the computers are connected with the communication terminal apparatus and the communication terminal apparatus is connected with the communication device of the internet service provider for relaying the connection with the internet through the public line.

According to another aspect of the invention, when the computer issues the request for connecting with the internet, the communication terminal apparatus operates to issue the connecting request to the internet service provider. When the connection with the internet is accepted in the authentication with the internet service provider, the internet service provider operates to allocate the global address to the communication terminal apparatus.

According to another aspect of the invention, the communication terminal apparatus shares the allocated addresses, performs the authentication when the computers connected with the communication terminal apparatus issues the request for connecting the internet, and allocate the corresponding private addresses to the computers determined to be connected with the internet.

According to another aspect of the invention, when the computer supplies the sending data to the communication terminal apparatus through the use of the private address, the sending source private address of the sending data is converted into the global address of the communication terminal apparatus and the ID information for determining which of the computers has sent the sending data is added to the sending data. When the responding data to the sending data is supplied from the internet, the communication terminal apparatus operates to convert the destination address of the responding data from the global address of the communication terminal apparatus into the private address on the basis of the ID information added to the responding data.

According to another aspect of the invention, when the computer issues the connecting request in connecting the communication terminal apparatus with the internet service provider, the communication terminal apparatus operates to immediately supply a signal for indicating completion of connecting the line to the computer and then start the authentication.

### BRIEF DESCRIPTION OF THE DRAWINGS

Fig. 1 is a block diagram showing an overall arrangement of the conventional communication system in the case of connecting a computer with an internet through a terminal adaptor;
Fig. 2 is a view showing the conventional connecting sequence in the case of connecting a computer with the internet through a terminal adaptor;
Fig. 3 is a block diagram showing the overall arrangement of the conventional communication system in the case of connecting a computer with the internet through a router;
Fig. 4 is a view showing the conventional connecting sequence in the case of connecting a computer with the internet through the router;
Fig. 5 is a block diagram showing the overall arrangement of the communication system to which the communication terminal apparatus according to the invention applies;
Fig. 6 is a block diagram showing an arrangement of a communication terminal apparatus according to an embodiment of the present invention;
Fig. 7 is a view showing a connecting sequence among a computer, the communication terminal apparatus and the ISP in the communication terminal apparatus according to an embodiment of the present invention;
Figs. 8A to 8D are views showing TCP packets, in which Fig. 8A shows a TCP packet to be sent from the computer to the communication terminal apparatus, Fig. 8B shows a TCP packet given after converting the address in the communication terminal apparatus, Fig. 8C shows a responding TCP packet, and Fig. 8D shows a responding TCP packet after converting the address; and
Fig. 9 is a view showing another example of a connecting sequence among the computer, the communication terminal apparatus and the ISP in the communication terminal apparatus according to an embodiment of the present invention.

### DETAILED DESCRIPTION OF THE EMBODIMENT

Hereafter, the description will be made in detail to a data communication method and a communication terminal apparatus according to an embodiment of the invention with reference to the appended drawings.

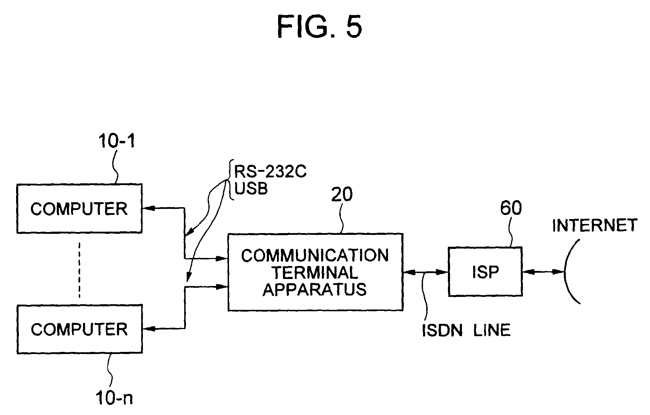

Fig. 5 shows an overall arrangement of a communication system arranged to use the communication terminal apparatus according to the invention. n (n is two or more integer) computers 10-1 to 10-n are connected to a communication device 20 with the interface standard such as the RS-232C or USB (Universal Serial Bus) interface. The communication device 20 is connected to a communication device of an internet service provider (ISP) 60 for relaying the connection with the internet, for example, through the ISDN (Integrated Service Digital Network).

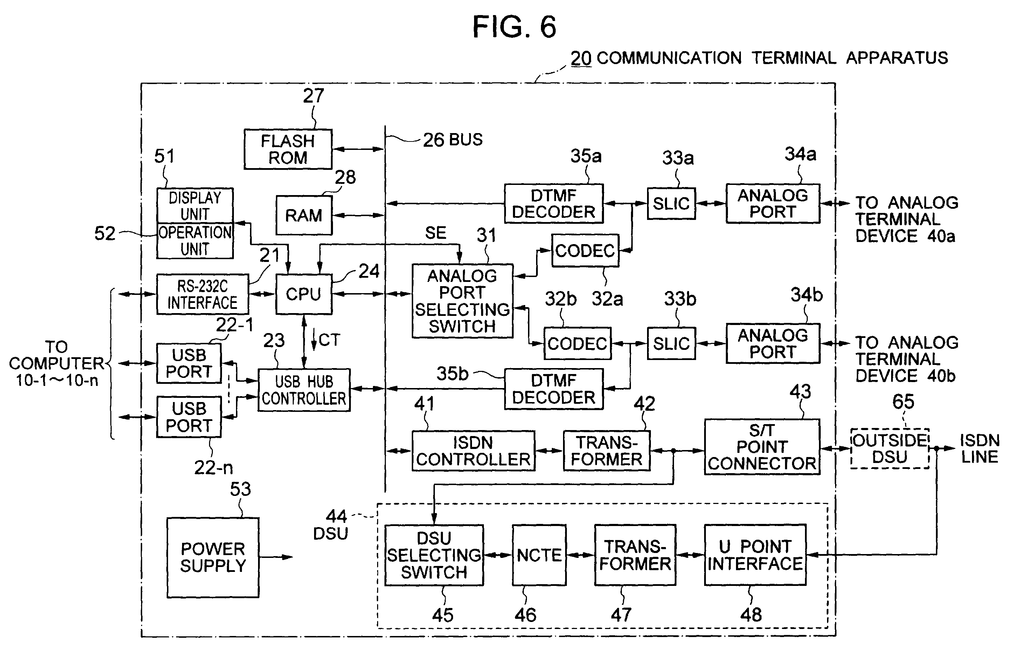

Fig. 6 illustrates the arrangement of the communication terminal apparatus 20 that may connect n computers 10-1 to 10-n with plural (for example, two) analog terminals 40a and 40b (not shown). Each of n computers 10-1 to 10-n is connected to a CPU (Central Processing Unit) 24 served as a control unit through a RS-232C Interface unit 21. Alternatively, each of n computers 10-1 to 10-n is connected with the CPU 24 and a bus 25 through the corresponding one of USB ports 22-1 to 22-n and a USB hub controller 23. In addition, the CPU 24 is served as the control unit for controlling the connection between the network and the computers through the ISP 60 according to the control program of the communication terminal apparatus 20 stored in a memory like a flash ROM 27 served as a storage unit, an address allocating unit, and an address converting unit (which will be discussed below).

The CPU 24 is connected to an analog port selecting switch 31 and an ISDN controller 41 through an address and data bus 25. The analog port selecting switch 31 is connected with CODEC (Coder and Decoder) units 32a and 32b corresponding to the analog terminal devices 40a and 40b, respectively. The analog port selecting switch 31 operates to select one of the CODEC units on the control signal SE from the CPU 24 and then transmit a signal to the selected CODEC unit.

The CODEC unit 32a operates to convert the analog signal from the SLIC (Subscriber Interface Circuit) unit 33a (to be discussed below) into the digital signal and then supply the digital signal into the analog port selecting switch 31. Conversely, the CODEC unit 32a operates to convert the digital signal from the analog port selecting switch 31 into the analog signal and then supply the analog signal into the SLIC unit 33a. Likewise, the CODEC unit 32b operates to convert the analog signal from the SLIC unit 33b into the digital signal and then supply the digital signal to the analog port selecting switch 31. Conversely, the CODEC unit 32b operates to convert the digital signal from the analog port selecting switch 31 into the analog signal and then supply the analog signal into the SLIC unit 33b.

The SLIC unit 33a is connected to the analog terminal device 40a through the analog port 34a. The SLIC unit 33a operates to control transmission of a sending signal and a receiving signal between the CODEC unit 32a and the analog terminal device 40a, perform the two lines to four lines conversion, output a calling signal to the analog terminal device 40a, perform a process of inverting the polarity when the analog terminal device is off the hook, and detect a number on the basis of the dial pulse signal given from the analog terminal device, and so forth. Likewise, the SLIC unit 33b operates to control transmission of a sending signal and a receiving signal between the CODEC unit 32b and the analog terminal device 40b connected therewith through the analog port 34b, and so forth.

When a DTMF (Dual Tone Multiplexed Frequency) signal is supplied from the analog terminal device 40a connected with the analog port 34a, this DTMF signal is supplied to the DTMF decoder 35a for detecting the number and then the detected number is supplied to the CPU 24 through the bus 25. Likewise, a DTMF decoder 35b operates to detect the number on the basis of the DTMF signal from the analog terminal device 40b connected with the analog port 34b and then supply the detected number to the CPU 24.

The ISDN controller 41 takes charge of an interface with the digital line. It connects with a DSU selecting switch 45 of an S/T point connector 43 or DSU (Digital Service Unit) 44 through a transformer 42. Herein, the S/T point is positioned on the lines between the transformer 42 and the S/T point connector 43 and between the S/T point connector 43 and the outside DSU 65. This transformer 42 keeps the insulation with the ISDN line if the DSU selecting switch 45 of the DSU 44 is made nonconductive.

The DSU selecting switch 45 is connected with an NCTE (Network Channel Terminating Equipment) 46 for terminating the circuit. This NCTE 46 is connected with a U point (termination of the ISDN line) interface 48 for connecting a transmission path through the transformer 47 for keeping the insulation with the ISDN line.

If the DSU 44 is used, the switch 45 is made conductive so that the ISDN line may be connected with the U point interface 48 and the S/T connector 43 may be connected with the digital terminal device. If the DSU 44 is not used, the switch 45 is made nonconductive so that the S/T point connector 43 is connected with the outside DSU 65.

The bus 25 is connected with a memory served as the storage unit such as a flash ROM 27 or a RAM 28. As noted above, the flash ROM 27 stores various kinds of data including a control (operation) program of the communication terminal device 20 used by the CPU 24, a phone number of the internet service provider 60, and the information (that is, the connecting information) required for the authentication. The RAM 28 temporarily stores the information required to perform various processes by the CPU 24. The CPU 24 served as the control unit performs the connecting process with the communication device for relaying the connection through the use of the connecting information stored in the storage unit when the computer issues the connecting request to the communication device (ISP 60) for relaying the connection.

The CPU 24 operates to control the USB hub controller 23 with a control signal CT on the basis of the operation program stored in the flash ROM 27 and control the operation of the analog selecting switch 31 through the effect of the control signal SE as mentioned above. Further, the CPU 24 controls the operations of the CODEC units 32a, 32b, the SLIC units 33a, 33b, and the DSU unit 44. The CPU 24 is connected to a display unit 51 and an operation unit 52. The display unit 51 displays the operating state of the communication terminal device 20. By operating the operation unit 52, it is possible to perform various settings such as setting of an operation of the communication terminal device 20. In addition, the communication terminal device 20 provides a power supply 53 for supplying an electric power required for each unit of the communication terminal apparatus 20.

The components 21, 22, 24, 23, 41 to 48 for doing the communication between the computer and the ISDN line compose the communication unit.

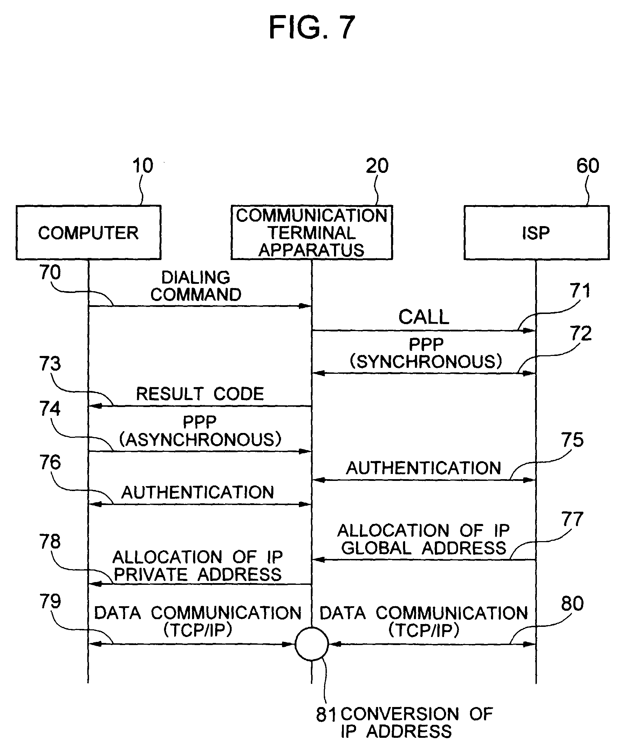

In turn, the operation of the communication terminal apparatus 20 will be described below. Fig. 7 shows an example of a sequence of connecting any one of the computers 10-1 to 10-n to the internet service provider 60. At first, the CPU 24 determines that the computer 10 supplies a given dialing command to the communication terminal apparatus 20 (step 70). Then, the CPU 24 operates to read the phone number (connecting information) of the internet service provider 60 stored in the flash ROM 27 and automatically call the internet service provider 60 through the ISDN controller 41, the S/T point connector 43 or the DSU 44 (step 71).

Then, the communication terminal apparatus 20 and the internet service provider 60 are synchronously connected in the PPP (Point to Point Protocol) or the PPP multi-link manner (step 72). Then, the communication terminal apparatus 20 operates to supply a result code for indicating the connection is established to the computer 10 (step 73), and the computer 10 is asynchronously connected with the communication terminal apparatus 20 in the PPP (step 74).

When the communication terminal apparatus 20 is connected with the internet service provider 60, the authentication is performed between the communication terminal apparatus 20 and the internet service provider 60 (step 75). If the authentication is performed by using the PAP (Password Authentication Protocol), the following operation is executed. At first, the communication terminal apparatus 20 operates to read the user ID and the password stored in the flash ROM 27 in response to the request given by the internet service provider 60 and then automatically supply them to the internet service provider 60. Then, the internet service provider 60 operates to determine if the user ID and the password are correct. If they are correct, the provider 60 accepts the connection with the internet, while if they are not correct, the provider 60 refuses the connection with the internet. If the authentication is performed by using the CHAP (Challenge Handshake Authentication Protocol), the following operation is executed. At first, the communication terminal apparatus 20 operates to perform the operation in the CPU 24 by using the challengeable value supplied from the internet service provider 60 and then supply the operated value to the internet service provider 60. Then, the internet service provider 60 determines if the given operated value is correct. If it is correct, the provider 60 accepts the connection with the internet, while if it is not correct, the provider 60 refuses the connection with the internet.

Upon completion of the authentication, the internet service provider 60 determines the acceptance of the connection with the internet, when the internet service provider 60 operates to allocate the IP global address to the communication terminal apparatus 20 (step 77). Hence, the use of the IP global address makes it possible for the communication terminal apparatus 20 to do the data communication with the WWW server or the like in the TCP/IP protocol through the internet service provider 60.

When the computer 10 is asynchronously connected with the communication terminal apparatus 20 in the PPP manner, the operation is executed to perform the similar authentication between the computer 10 and the communication terminal apparatus 20 to that between the computer 10 and the communication terminal apparatus 20. Then, the communication terminal apparatus 20 determines if the connection with the internet is accepted or refused (step 76). Hence, the authentication between the communication terminal apparatus 20 and the internet service provider 60 and the authentication between the computer 10 and the communication terminal apparatus 20 make it possible to emulate the authentication between the computer 10 and the internet service provider 60.

Upon completion of the authentication between the computer 10 and the communication terminal apparatus, when the communication terminal apparatus 20 determines the acceptance of the connection with the internet, the communication terminal apparatus 20 operates to allocate the IP private address to the computer 10 (step 78). Then, the use of this IP private address makes it possible to perform the data communication between the computer 10 and the communication terminal apparatus 20 in the TCP/IP protocol (steps 79 and 80). These kinds of authentication and allocation of the IP private address are realized by the function of the address allocating unit of the control program of the communication terminal apparatus 20 stored in the flash ROM 27.

Herein, when the computer 10 specifies the IP address on the internet in doing the data communication, the CPU 24 of the communication terminal apparatus 20 performs the address conversion (step 81) so that a plurality of IP private addresses may correspond to one IP global address.

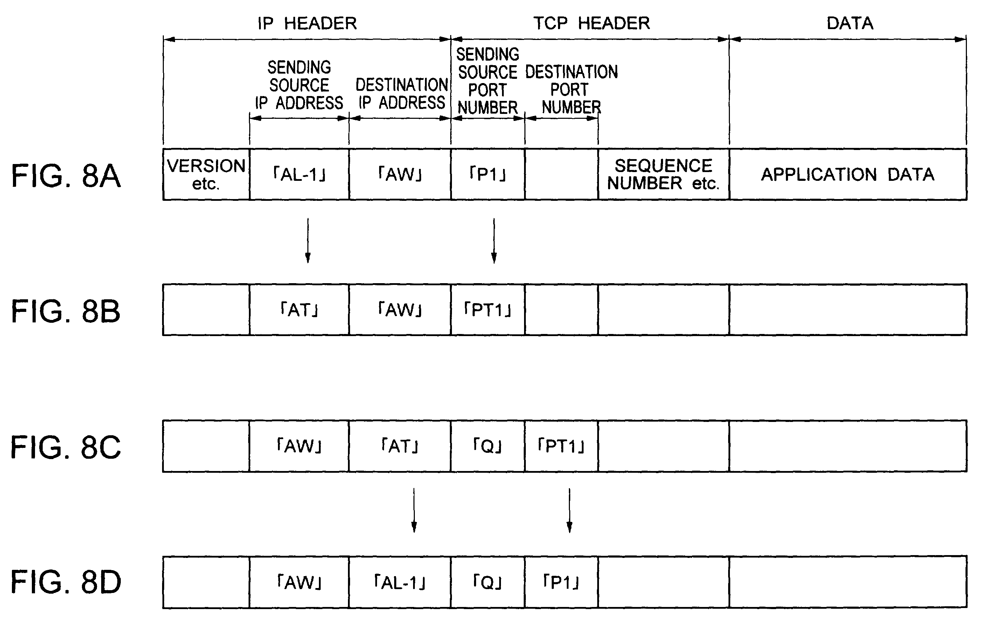

For example, in the TCP packet supplied by the computer 10 shown in Fig. 8A to the communication terminal apparatus 20, as the sending source IP address indicated by the IP header is indicated the IP private address "AL-1" allocated to the computer 10 and the specified IP address "AW^{"} on the internet is indicated as the destination IP address. In addition, the sending source port number of the TCP header is "P1".

The CPU 24 provided in the communication terminal apparatus 20 performs the address conversion. As shown in Fig. 8A, the sending source IP address indicated by the IP header is replaced with the IP global address "AT" allocated to the communication terminal apparatus 20 in place of the IP private address "AL-1". Further, the communication terminal apparatus 20 operates to store in the RAM 28 the correspondence of the port number "PT1" to the port number "P1" and the IP local address "AL-1" as the conversion information.

As mentioned above, when the TCP packet that was subject to the address conversion is sent from the communication terminal apparatus 20 to the internet, the responding TCP packet from the server specified by the destination IP address is as shown in Fig. 8C. That is, the IP global address is made to be the destination IP address and the port number "PT1" is made to be the destination port number. Hence, the responding TCP packet is correctly transmitted from the server specified by the destination IP address to the communication terminal apparatus 20 with the destination IP address "AT". The sending source port number is "Q".

The CPU 24 provided in the communication terminal apparatus 20 performs the address conversion through the use of the destination port number contained in the TCP header of the responding TCP packet. That is, since the destination port number is "PT1", it is determined which of the port number "P1" and the IP local address "AL-1" corresponds to the destination port number "PT1" on the basis of the conversion information stored in the RAM 28. As shown in Fig. 8D, the destination port number is changed from "PT1" to "P1". At a time, the destination IP address is changed from the IP global address "AT" of the communication terminal apparatus 20 into the IP local address "AL-1" of the computer 10. This address conversion results in making the responding TCP packet the TCP packet destined for the computer 10, which may be processed by the computer 10.

This kind of address conversion is realized by the function of the address conversion of the control program of the communication terminal apparatus 20 stored in the flash ROM 27.

The foregoing connecting sequence has concerned with the case that the communication terminal apparatus 20 is not connected with the internet service provider 60. Alternatively, the connecting sequence may be concerned with the case that the communication terminal apparatus 20 has been already connected with the internet service provider 60 so that the internet service provider 60 has been communicating with another computer 10, for example, the computer 10-g.

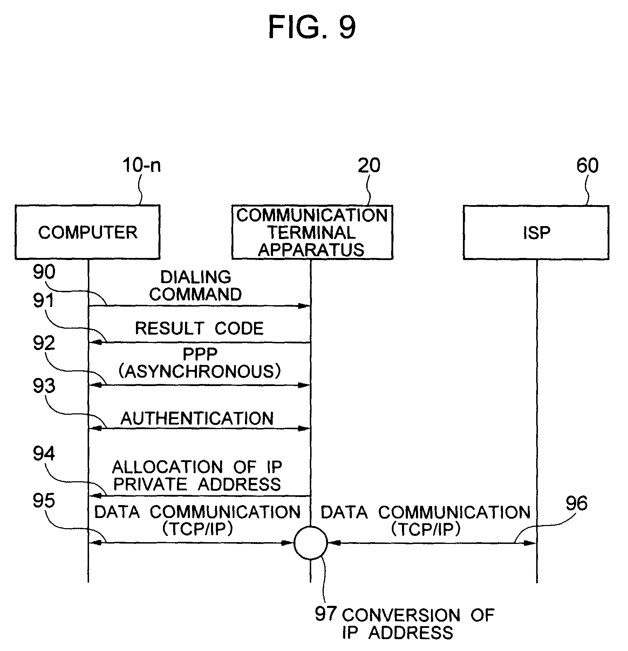

In the latter case, as indicated by the connecting sequence of Fig. 9, the CPU 24 determines that a given dialing command is newly supplied from another computer 10 such as a computer 10-h to the communication terminal apparatus 20 (step 90). In this case, since the communication terminal apparatus 20 has been connected with the internet service provider 60, the result code for indicating the line connection is established is immediately supplied from the communication terminal apparatus 20 to the computer 10-h (step 91), so that the computer 10 is asynchronously connected with the communication terminal apparatus 20 in the PPP manner (step 92).

Afterwards, like the foregoing method, the authentication is performed between the computer 10 and the communication terminal apparatus 20 (step 93). Upon completion of the authentication therebetween, the communication terminal apparatus 20 determines the acceptance of the connection with the internet, when the IP private address is allocated to the computer 10 (step 94) and the use of this IP private address makes the data communication between the computer 10 and the communication terminal apparatus 20 in the TCP/IP protocol possible (steps 95 and 96). Further, when the computer 10-h specifies the IP address on the internet in doing the data communication, the communication terminal apparatus 20 operates to replace the sending source port number used by the computer 10-g under data communication with another port number and then stores in the RAM 28 the port number before the corresponding conversion to the replaced port number and the IP local address as the conversion information.

The foregoing address conversion (step 97) makes it possible to correspond plural IP private addresses to one IP global address or allow plural IP private addresses to share one IP global address. Hence, even if each of the computers 10-1 to 10-n operates to perform the data communication, the communication terminal apparatus 20 operates to correctly distribute the TCP packets so that each computer may process the TCP packets.

As set forth above, according to the foregoing embodiment, merely by connecting plural computers 10 with the communication terminal apparatus 20 through the RS-232C interface, the USB or the like, those computers may inexpensively connect to the internet without using the network device. Further, the computer is not required to constantly connect with the LAN and just needs the private address only when it has to connect with the internet. It thus does not bring about the increase of the load burdened on the computer. Moreover, the conversion of the IP address is automatically executed by the communication terminal apparatus 20. Hence, each computer does not need a complicated setup operation, so that the computers may easily connect to the internet like the conventional terminal adaptor. The foregoing embodiment has concerned with the arrangement that the computers are connected with the internet provider through the ISDN and communicates with the internet in the TCP protocol. This holds true to the arrangement that it may connect to the internet service provider through an analog public line. Further, it goes without saying that the network or the protocol is not limited to the internet TCP.

According to the present invention, the communication terminal apparatus operates to share the allocated address and allocate another private address to the computer determined to accept the connection with the network after the authentication is executed if the computers connected with the communication terminal apparatus itself has issued the request for connecting to the network. Further, the communication terminal apparatus also operates to convert the sending source private address of the sending data sent from the computer with the private address into the global address of the communication terminal apparatus itself and add the ID information for determining which of the computers has sent the data to the sending data before transmitting the data. Moreover, the communication terminal apparatus also operates to convert the destination address of the responding data from the global address of the communication terminal apparatus into the private address based on the ID information. Hence, the communication terminal apparatus allows plural computers to connect to the network only when required in an inexpensive arrangement having no network device.

Further, the communication terminal apparatus operates to store the phone number of the communication device for relaying the connection with the network and the information (connecting information) required for authenticating the connection with the network. If the request is issued for connecting the computer with the network, the communication terminal apparatus is automatically connected with the communication device for relaying the connection through the use of this phone number and the information required for the authentication. Moreover, since the foregoing address conversion is automatically executed, the computers may be easily connected to the network.

## Claims

1. A data communication method for communicating data by connecting plural computers (10) with a network through a communication terminal apparatus (20), comprising the step of:
a) enabling said communication terminal apparatus to determine whether requests to connect with said network from said plural computers are to be accepted; and
b) enabling said communication terminal apparatus to allocate different private addresses to said plural computers determined to accept the requests to connect with said network (step 78).

2. A data communication method as claimed in claim 1, wherein
said step a) includes a substep (steps 75 and 76) of performing an authenticating process for a request for connecting to said network issued by one of said plural computers, and
said step b) includes a substep (step 78) of, when said authentication process determines acceptance of connection with said network, allocating the corresponding one of said different private addresses to one of said plural computers.

3. A data communication method as claimed in claim 1, wherein said communication terminal apparatus performs data communications through the use of an allocated global address, and further comprising the steps of:
c) enabling said communication terminal apparatus to convert said sending source private address into said global address when the supplied data has said allocated private address as its sending source private address and to add to said sending data ID information for determining which of said computers has sent said data before transmitting said data to said network side (steps 79 and 80); and
d) enabling said communication terminal apparatus to convert a destination address of said responding data into a private address allocated to one of said computers determined on said ID information added to said responding data when the responding data to said sending data is supplied from said network side (steps 79 and 80).

4. A data communication method as claimed in claim 1, wherein said communication terminal apparatus operates to connect to said network through a connection relaying communication device (60) for enabling connection with said network, and further comprising the steps of:
e) enabling said communication terminal apparatus to issue a connecting request to said connection relaying communication device when one of said computers has issued the request for connecting with said network (step 71); and
f) performing the authentication when said communication terminal apparatus is connected with said connection relaying communication device (steps 75 and 76), and, after said authenticated result indicates that said connection relaying communication device accepts the connection with said network, enabling said connection relaying communication device to allocate a global address to said communication terminal apparatus (step 77).

5. A data communication method as claimed in claim 4, further comprising the steps of:
g) when another computer of said plural computers issues a connecting request in the established connection between said communication terminal apparatus and said connection relaying communication device (step 90), enabling said communication terminal apparatus to immediately supply a signal for indicating completion of line connection to said another computer (step 91).

6. A communication terminal apparatus (20) for data communication by connecting a network with plural computers (10) through said communication terminal apparatus itself, comprising:
a control unit (CPU 24) for controlling connection between said network and said plural computers; and
an address allocating unit (CPU 24) for allocating respective private addresses to said plural computers which are allowed to be connected to said network with respect to requests for connecting to said network.

7. A communication termination apparatus (20) as claimed in claim 6, wherein said address allocating unit performs an authenticating process with respect to the request for connecting to said network given from one of said plural computers, determines acceptance of connection to said network as a result of said authenticating process, and then allocating the corresponding one of said respective private addresses to one of said computers.

8. A communication termination apparatus (20) as claimed in claim 6, further comprising an address converting unit for, when one of said computers supplies the sending data having said allocated private address as a sending source private address, converting said sending source private address into said global address, adding to said sending data ID information for determining which of said computers has sent said sending data, and sending the resulting data to said network side, said address converting unit further serving to, when the responding data to said sending data is supplied from said network side, converting a destination address of said responding data to a private address allocated to one of said computers determined on said ID information added to said responding data.

9. A communication termination apparatus (20) as claimed in claim 6, further comprising:
a control unit (CPU 24) for controlling connection between said network and said computers through a connection relaying communication device (60) for connecting said communication termination apparatus with said network;
a storage unit (27, 28) for storing information of connecting said communication termination apparatus with said connection relaying communication device; and
wherein when one of said computers issues a request for connecting with said connection relaying communication device, said control unit operates to connect said computer with said connection relaying communication device through the use of the connecting information stored in said storage unit.

10. A communication termination apparatus (20) as claimed in claim 9, wherein said control unit performs an authenticating process with respect to one of said computers having issued the request for connecting with said connection relaying communication device.

11. A communication termination apparatus (20) as claimed in claim 10, wherein said address allocating unit allocates the private address to one of said computers having issued the request for connection when the acceptance of connection with said network by said connection relaying communication device is determined as a result of said authenticating process with respect to one of said plural computers having Issued the request for connecting with said connection relaying communication device.

12. A communication termination apparatus (20) as claimed in claim 10, wherein when said communication termination apparatus has been already connected with said connection relaying communication device, said control unit performs an authenticating process with respect to one of said computers having issued the request for connecting with said connection relaying communication device immediately when one of said computers has issued the request for connecting with said connection relaying communication device.
